# EUROPÄISCHE PATENTSCHRIFT

(11) **EP 1 787 531 B1**
(45) Veröffentlichungstag und Bekanntmachung des Hinweises auf die Patenterteilung: **10.09.2008**
(21) Anmeldenummer: 06119302.5
(22) Anmeldetag: 22.08.2006
(51) Int. Cl.: A23L 1/16

(54) **Verfahren zur Herstellung von Rohteig für Teigwaren**
Method for manufacturing raw dough for pasta
Procédé pour la fabrication de pâte crue pour des pâtes alimentaires

(30) Priorität: 10.11.2005 DE 102005054020
(43) Veröffentlichungstag der Anmeldung: 23.05.2007
(73) Patentinhaber: Bühler AG, 9240 Uzwil (CH)
(72) Erfinder: Lang, Thomas, 8546, Islikon (CH); Geiger, Raphael, 8954, Geroldswil (CH); Stösser, Gabriel, 8585, Langrickenbach (CH)
(74) Vertreter: Frommhold, Joachim

(56) Entgegenhaltungen:
- JP-A- 8 023 905
- JP-A- 56 045 167
- JP-A- 61 070 951

## Beschreibung

Die vorliegende Erfindung bezieht sich auf ein Verfahren zur Herstellung von Rohteig für Teigwaren.

Es sind zahlreiche Verfahren zur Herstellung von Teigwaren bekannt. Die meisten Verfahren verwenden als Rohmaterialien Mehl, Dunst und Griess auf Getreidebasis.

Zumindest ein Teil der Rohmaterialien wird aus Klebereiweiss enthaltenden Getreidesorten wie Weizen oder Roggen gewonnen, da die Anwesenheit des Klebereiweisses notwendig ist, um zusammen mit den Stärkekömem des Rohmaterials einen Teig zu bilden. Alternativ oder ergänzend kann man Eigelb und/oder Eiweiss aus Eiern als Kleberersatz verwenden. Eine weitere Möglichkeit, die Wirkung des Klebereiweisses zu ersetzen, ist z.B, die Teilgelatinierung der Stärke z.B. durch Dämpfen der Rohmaterialien.

Die üblichen Verfahren zur Herstellung von Rohteig verwenden eine stärkehaltige Rohmaterialien aufweisende Rohmaterial-Trockenmischung, der dosiert Wasser zugeführt wird, das dann in die Rohmaterial-Trockenmischung eingemischt wird. Anschliessend wird diese feuchte Mischung geknetet, wodurch ein Rohteig entsteht.

Das Einmischen des Wassers und das anschliessende Kneten erfordern einen beachtlichen spezifischen mechanischen Energieeintrag (SME).

So offenbart die JP 61 070951 A ein Verfahren zur Herstellung von Nudeln mit guter Textur, wobei mindestens 50% des Mehls mit der Gesamtmenge an Wasser gemischt werden und der so erhaltene Teig in Wasser, vorzugsweise für 1 bis 36 Stunden, eingebettet wird, wonach der Teig aus dem Wasser entfernt und die restliche Mehlmenge zugegeben wird. Der dann erhaltene Gesamtteig wird geknetet und aus ihm die Nudeln hergestellt.

Bei all diesen Verfahren zur Herstellung von Rohteig werden Rohmaterialien mit einem mehr oder weniger breiten Granulationsspektrum verwendet. Um eine gleichmässige Befeuchtung solcher Rohmaterialien zu erreichen, bedarf es einer intensiven Einmischung und Verteilung des Wassers in die trockenen Rohmaterialien. Aus technologischen Gründen braucht es zur Rohteigbildung eine optimale Benetzung des Griesses mit Wasser, Energie (mechanisch) sowie eine vom Rohmaterial abhängige Verweilzeit, damit das Wasser in die Griesspartikel diffundieren kann. Bei ungenügender Benetzung oder zu geringer Verweilzeit kann es vorkommen, dass nicht alle Teile des Rohmaterials gleich stark angefeuchtet werden, so dass nicht angefeuchtete trockene "Nester" im Rohmaterial auftreten, oder dass vorwiegend die gröberen Partikel des Rohmaterials nicht oder ungenügend durchfeuchtet werden.

Wenn keine gleichmässige Befeuchtung erfolgt, wirkt sich dies auf die Qualität des Rohteiges und der daraus hergestellten Teigwaren negativ aus. Insbesondere kann dies bei den aus dem Rohteig geformten und ggf. getrockneten Teigwaren zu weissen Punkten führen.

Der Erfindung liegt die Aufgabe zugrunde, ein Verfahren zur Herstellung von Rohteig bereitzustellen, das in kurzer Zeit selbst bei Rohmaterialien mit grossem Granulationsspektrum einen Rohteig mit gleichmässiger Durchfeuchtung als Voraussetzung für Teigwaren einwandfreier Qualität ergibt.

Diese Aufgabe wird erfindungsgemäss gelöst durch ein Verfahren zur Herstellung von Rohteig unter Verwendung stärkehaltiger Rohmaterialien, insbesondere Mehl, Dunst und Griess auf Getreidebasis, wobei das Verfahren die folgenden Schritte aufweist:
a) Bereitstellen einer stärkehaltige Rohmaterialien aufweisenden Rohmaterial-Trockenmischung, die gröbere und feinere Partikel enthält;
b) kontinuierliches Transportieren der Rohmaterial-Trockenmischung als Rohmaterial-Strom;
c) Aufspalten des Rohmaterial-Stroms in mindestens zwei Teilströme, wobei ein Grobanteil-Teilstrom vorwiegend Grobanteil der Rohmaterial-Trockenmischung enthält, bei welchem Grobanteil-Teilstrom mindestens 60 Gew.% der Partikel grösser als eine Partikelgrössen-Grenze sind; und wobei ein Feinanteil-Teilstrom vorwiegend Feinanteil der Rohmaterial-Trockenmischung enthält; bei welchem Feinanteil-Teilstrom höchstens 40 Gew.% der Partikel grösser als die Partikelgrössen-Grenze sind, und wobei die Partikelgrössen-Grenze im Bereich von 200 µm bis 500 µm liegt,
d) dosiertes Zuführen von Wasser in den Grobanteil-Teilstrom und Benetzen der Partikel des Grobanteil-Teilstroms;
e) Zusammenführen des die benetzten Partikel aufweisenden Grobanteil-Teilstroms mit dem trockenen Feinanteil-Teilstrom und Mischen der beiden Teilströme zu einem feuchten Rohmaterial-Gesamtstrom bis ein Rohteig entsteht.

Mit anderen Worten stellt die Erfindung ein Verfahren bereit zur Herstellung von Rohteig unter Verwendung stärkehaltiger Rohmaterialien, insbesondere Mehl, Dunst und Griess auf Getreidebasis, wobei das Verfahren die folgenden Schritte aufweist:
➢ Bereitstellen einer stärkehaltige Rohmaterialien aufweisenden Rohmaterial-Trockenmischung, die gröbere und feinere Partikel enthält;
➢ Klassieren der Rohmaterial-Trockenmischung in mehrere Partikel-Fraktionen mit einem jeweiligen Kömgrössen-Spektrum innerhalb eines Korngrössen-Fensters;
➢ fraktionsspezifisches Zuführen von Wasser zu den jeweiligen Partikel-Fraktionen und Benetzen der Partikel in den jeweiligen Fraktionen;
➢ Zusammenführen der die benetzten Partikel aufweisenden Partikel-Fraktionen und Mischen der Partikel-Fraktionen zu einem feuchten Rohmaterial-Gesamtstrom, bis ein Rohteig entsteht.

In den meisten Fällen reicht es aus, wenn der trockene Rohmaterial-Gesamtstrom in zwei oder drei Teilströme aufgeteilt wird. Diese werden dann fraktionsspezifisch angefeuchtet. In der Regel bedeutet dies, dass die Fraktion oder die Fraktionen mit den gröberen Anteilen einen höheren relativen Wasseranteil erhält bzw. erhalten als der angestrebten Endfeuchte des fertigen Rohteigs entspricht ("Überfeuchtung"), während die Fraktion oder die Fraktionen mit den feineren Anteilen einen niedrigeren relativen Wasseranteil erhält bzw. erhalten als der angestrebten Endfeuchte des fertigen Rohteigs entspricht ("Unterfeuchtung"). Das an den Griesspartikeln haftende überschüssige Wasser ("Restwasser") diffundiert im Verlaufe des weiteren Verfahrens nach dem Zusammenführen der jeweils spezifisch angefeuchteten Fraktionen in die groben und in die feinen Partikel.

Als Rohteig wird hier die gleichmässig durchfeuchtete Rohmaterial-Mischung bezeichnet, der ggf. noch weitere mechanische Energie durch Kneten zugeführt wird.

Anstatt von einem Rohmaterial-Strom aus einer Rohmaterial-Trockenmischung auszugehen, der dann in mehrere Teilströme aufgespalten bzw. fraktioniert wird, können auch Rohmaterial-Anteile mit unterschiedlichen Korngrössenverteilungen verwendet werden, die dann fraktionsspezifisch angefeuchtet werden und anschliessend zu einem feuchten Rohmaterial-Gesamtstrom zusammengeführt und weiterverarbeitet werden.

Die Begriffe Teilstrom und Fraktion werden im folgenden als Synonyme verwendet. Das erfindungsgemässe Verfahren kann chargenweise oder kontinuierlich durchgeführt werden.

Das fraktionsspezifische Zuführen von Wasser und Benetzen der Partikel der jeweiligen Fraktion ermöglicht eine optimale Benetzung aller Partikel in der jeweiligen Fraktion. Das dosierte Zuführen von Wasser in den mindestens einen Grobanteil-Teilstrom und Benetzen der Partikel des Grobanteil-Teilstroms gewährleistet, dass praktisch alle groben Partikel dieses Teilstroms bzw. dieser Fraktion benetzt werden, da bei einer solchen separaten Anfeuchtung das Wasser auf nur wenig Rohmaterial-Feinanteil trifft, der aufgrund seines grossen Oberfläche/Volumen-Verhältnisses einen Grossteil des Wassers binden würde, das wiederum für die Benetzung der groben Partikel fehlen würde.

Dies ermöglicht z.B. die Benetzung des Grobanteils mit nur einem Bruchteil des für die angestrebte Endfeuchte des Rohteiges benötigten Wassers.

Zweckmässigerweise wird daher in Schritt d) weniger Wasser zudosiert als der angestrebten Endfeuchte des Rohteigs entspricht, wobei nach dem Zusammenführen in Schritt e) ein weiterer Schritt f) erfolgt zum dosierten Zuführen und Einmischen von weiterem Wasser in den zusammengeführten und gemischten feuchten Rohmaterial-Gesamtstrom, bis die angestrebte Endfeuchte des Rohteiges erreicht ist.

Die Rohmaterial-Trockenmischung kann ein Granulationsspektrum im Bereich von 0 µm bis 800 µm haben. Je nach Proteingehalt und Korngrössenspektrum der Rohmaterial-Trockenmischung kann dann deren Aufspaltung in Teilströme bzw. deren Fraktionierung und die dem jeweiligen Teilstrom bzw. der jeweiligen Fraktion zugeführte Wassermenge optimiert werden.

Es hat sich gezeigt, dass es vorteilhaft ist, wenn in Schritt c) der Rohmaterial-Strom in einen Grobanteil-Teilstrom und in einen Feinanteil-Teilstrom aufgespalten wird, wobei bei dem Grobanteil-Teilstrom mindestens 60 Gew.% der Partikel grösser als eine Partikelgrössen-Grenze sind, bei dem Feinanteil-Teilstrom höchstens 40 Gew.% der Partikel grösser als die Partikelgrössen-Grenze sind, und die Partikelgrössen-Grenze im Bereich von 200 µm bis 500 µm liegt.

Vorzugsweise sind bei dem Grobanteil-Teilstrom mindestens 70 Gew.% der Partikel grösser als die Partikelgrössen-Grenze und bei dem Feinanteil-Teilstrom höchstens 30 Gew.% der Partikel grösser als die Partikelgrössen-Grenze.

Besonders vorteilhaft ist es, wenn die Partikelgrössen-Grenze im Bereich von 300 µm bis 400 µm liegt.

Der Mittelwert der Korngrössen-Verteilung des Grobanteil-Teilstroms sollte dabei im Bereich von 350 µm bis 600 µm und der Mittelwert der Korngrössen-Verteilung des Feinanteil-Teilstroms im Bereich von 100 µm bis 300 µm liegen.

Auch die mengenmässige Aufspaltung in Teilströme oder Fraktionen ist für das erfindungsgemässe Verfahren von Bedeutung. Vorteilhaft ist es, wenn der Grobanteil-Teilstrom 10 bis 50 Gew.% des Rohmaterial-Stroms beträgt und der Feinanteil-Teilstrom 90 bis 50 Gew.% des Rohmaterial-Stroms beträgt.

Vorzugsweise beträgt der Grobanteil-Teilstrom 20 bis 45 Gew.% des Rohmaterial-Stroms und der Feinanteil-Teilstrom 80 bis 55 Gew.% des Rohmaterial-Stroms.

Bei einer besonders vorteilhaften Ausführung der Erfindung wird in Schritt d) der Grobanteil-Teilstrom durch eine Mischzone mit einem Mischvolumen transportiert, und beim Zuführen von Wasser in den Grobanteil-Teilstrom werden sowohl das Wasser als auch die Partikel des Grobanteil-Teilstroms in dispergierter Form miteinander in Kontakt gebracht. Dies kann durch Zerstäuben, Vertröpfeln oder Versprühen des Wassers durch entsprechende Düsen oder indirekt durch das Auftreffen eines Wasserstrahls auf eine Zerstäubungsfläche erfolgen. Insbesondere können auch rotierende Düsen an oder in dieser Mischzone verwendet werden. Neben der Verwendung von Trägheitskräften des dispergierten Wassers können auch Trägheitskräfte der dispergierten Rohmaterial-Partikel verwendet werden. Dies kann z.B. durch eine rotierende Mischzone, insbesondere mit mitrotierenden Einbauten (Schaufeln, Leitbleche) erfolgen.

Vorzugsweise beträgt der Wasseranteil in Schritt d) zwischen 10 % und 100 % des für die angestrebte Rohteig-Endfeuchte benötigten Wassers. Dadurch wird in der Regel eine vollständige Benetzung des Grobanteils gewährleistet.

Zur Sicherheit kann der Wasseranteil in Schritt d) sogar mehr als 100 % des für die angestrebte Rohteig-Endfeuchte benötigten Wassers betragen. Das überschüssige Wasser kann dann ggf. im Kreislauf geführt werden.

Weiterhin hat es sich als vorteilhaft erwiesen, wenn in Schritt d) zwischen 15 Gew.% und 80 Gew.% des für die angestrebte Rohteig-Endfeuchte benötigten Wassers in den Grobanteil-Teilstrom zudosiert wird und in Schritt f) zwischen 85 Gew.% und 20 Gew.% des für die angestrebte Rohteig-Endfeuchte benötigten Wassers in den feuchten Rohmaterial-Gesamtstrom zudosiert wird. Diese Angaben in Gew.% werden dabei auf die Gesamtmasse des in Schritt e) erhaltenen feuchten Rohteiges bezogen.

Vorzugsweise wird in Schritt d) zwischen 25 Gew.% und 70 Gew.% des für die angestrebte Rohteig-Endfeuchte benötigten Wassers in den Grobanteil-Teilstrom zudosiert und in Schritt f) zwischen 75 Gew.% und 30 Gew.% des für die angestrebte Rohteig-Endfeuchte benötigten Wassers in den feuchten Rohmaterial-Gesamtstrom zudosiert.

Die angestrebte Endfeuchte des fertigen Rohteiges beträgt 25 Gew.% bis 35 Gew.% bezogen auf die feuchte Rohteig-Masse. Mit dem erfindungsgemässen Verfahren ist es möglich, selbst mit geringer Endfeuchte des Rohteiges Teigwaren hoher Qualität in kurzer Zeit herzustellen. Dieser geringe Wassergehalt ist besonders vorteilhaft im Hinblick auf den so erzielten geringeren Trocknungs- und somit Energiebedarf bei einer anschliessenden Trocknung der aus dem Rohteig geformten Teigwaren zu Trockenteigwaren.

Weitere Vorteile, Merkmale und Anwendungsmöglichkeiten der Erfindung ergeben sich aus der nun folgenden, nicht einschränkend aufzufassenden Beschreibung bevorzugter Beispiele.

### Beispiel 1

Aus einer Rohmaterial-Trockenmischung von 100 kg/h, die vorwiegend Hartweizen-Griess enthält, wurde eine Grobanteil-Fraktion abgetrennt, bei der mehr als 85 Gew.% aus Partikeln mit einer Partikelgrösse von mehr als 355 µm bestehen.

Eine Menge von 40 kg/h dieser Grobanteil-Fraktion wurde mit 10,04 kg/h Wasser mit einer Temperatur von 35°C angefeuchtet. Hierzu wurden die 40 kg/h Grobanteil-Fraktion gleichmässig in eine Befeuchtungskammer eindosiert und durch diese hindurchgeführt. Die trockene Grobanteil-Fraktion wurde dabei in einem Schnellmischer bei einer Drehzahl von 900 rpm fluidisiert und in fluidisiertem Zustand durch die Befeuchtungskammer hindurch gefördert. Gleichzeitig wurden die 10,04 kg/h Wasser in der Befeuchtungskammer versprüht. Dadurch wurde eine vollkommene Benetzung der Partikel erreicht.

Der verbleibende Anteil der Rohmaterial-Trockenmischung, d.h. die Feinanteil-Fraktion mit einer Menge von 60 kg/h, bei dem mehr als 99 Gew.% aus Partikeln mit einer Partikelgrösse von weniger als 355 µm bestehen, wurde nicht angefeuchtet.

Die 40 kg/h angefeuchtete Grobanteil-Fraktion und die 60 kg/h trockene Feinanteil-Fraktion wurden in einem Mischer/Kneter mit einer Gehäusetemperatur von 35°C bei Drehzahlen von 55 rpm zusammengeführt, wobei erneut Wasser mit einer Temperatur von 35°C in einer Menge von 14,88 kg/h zugeführt wurde.

Auf diese Weise wurde ein feuchter Rohmaterial-Gesamtstrom erhalten, der 100 kg/h Rohmaterial-Trockenmischung und 25 kg/h zudosiertes Wasser enthält. Zusammen mit 13,8 Gew.% Wassergehalt der Rohmaterial-Trockenmischung erhält man dadurch eine Rohteig-Endfeuchte von (13,8 + 10,04 + 14,88) / 125 = 31,0 Gew.% bezogen auf die feuchte Rohteig-Masse.

Der feuchte Rohmaterial-Gesamtstrom wurde nach dem Mischer/Kneter auf einen Vakuumdruck (Absolutdruck) von 126 mbar entgast und in eine Presse weitergeleitet. In der Presse wurde bei einer Drehzahl von 22 rpm bei einer Gehäusetemperatur von 28°C ein Druck von 92 bar am Pressenkopf bei einer Kopftemperatur von 45°C aufgebaut, und der Rohteig wurde zu Langware (Spaghetti) geformt.

Die so erhaltenen Teigwaren wiesen weder als feuchte Frischteigwaren noch als getrocknete Teigwaren weisse Punkte auf.

### Beispiel 2

Aus einer Rohmaterial-Trockenmischung von 100 kg/h, die vorwiegend Hartweizen-Griess (Barilla Griess) enthält, wurde eine Grobanteil-Fraktion abgetrennt, bei der mehr als 85 Gew.% aus Partikeln mit einer Partikelgrösse von mehr als 355 µm bestehen.

Eine Menge von 40 kg/h dieser Grobanteil-Fraktion wurde mit 16,04 kg/h Wasser mit einer Temperatur von 35°C angefeuchtet. Hierzu wurden die 40 kg/h Grobanteil-Fraktion gleichmässig in eine Befeuchtungskammer eindosiert und durch diese hindurchgeführt. Die trockene Grobanteil-Fraktion wurde dabei in einem Schnellmischer bei einer Drehzahl von 900 rpm fluidisiert und in fluidisiertem Zustand durch die Befeuchtungskammer hindurch gefördert. Gleichzeitig wurden die 16,04 kg/h Wasser in der Befeuchtungskammer versprüht. Dadurch wurde eine vollkommene Benetzung der Partikel erreicht.

Der verbleibende Anteil der Rohmaterial-Trockenmischung, d.h. die Feinanteil-Fraktion mit einer Menge von 60 kg/h, bei dem mehr als 99 Gew.% aus Partikeln mit einer Partikelgrösse von weniger als 355 µm bestehen, wurde nicht angefeuchtet.

Die 40 kg/h angefeuchtete Grobanteil-Fraktion und die 60 kg/h trockene Feinanteil-Fraktion wurden in einem Mischer/Kneter mit einer Gehäusetemperatur von 35°C bei Drehzahlen von 55 rpm zusammengeführt, wobei erneut Wasser mit einer Temperatur von 35°C in einer Menge von 8,88 kg/h zugeführt wurde.

Auf diese Weise wurde ein feuchter Rohmaterial-Gesamtstrom erhalten, der 100 kg/h Rohmaterial-Trockenmischung und 25 kg/h zudosiertes Wasser enthält. Zusammen mit 13,8 Gew.% Wassergehalt der Rohmaterial-Trockenmischung erhält man dadurch eine Rohteig-Endfeuchte von (13,8 + 16,04 + 8,88) / 125 = 31,0 Gew.% bezogen auf die feuchte Rohteig-Masse.

Der feuchte Rohmaterial-Gesamtstrom wurde nach dem Mischer/Kneter auf einen Vakuumdruck (Absolutdruck) von 99 mbar entgast und in eine Presse weitergeleitet. In der Presse wurde bei einer Drehzahl von 22 rpm bei einer Gehäusetemperatur von 28°C ein Druck von 82 bar am Pressenkopf bei einer Kopftemperatur von 45°C aufgebaut, und der Rohteig wurde zu Langware (Spaghetti) geformt.

Die so erhaltenen Teigwaren wiesen weder als feuchte Frischteigwaren noch als getrocknete Teigwaren weisse Punkte auf.

## Patentansprüche

1. Verfahren zur Herstellung von Rohteig unter Verwendung stärkehaltiger Rohmaterialien, insbesondere Mehl, Dunst und Griess auf Getreidebasis, wobei das Verfahren die folgenden Schritte aufweist:
a) Bereitstellen einer stärkehaltige Rohmaterialien aufweisenden Rohmaterial-Trockenmischung, die gröbere und feinere Partikel enthält;
b) kontinuierliches Transportieren der Rohmaterial-Trockenmischung als Rohmaterial-Strom;
c) Aufspalten des Rohmaterial-Stroms in mindestens zwei Teilströme, wobei ein Grobanteil-Teilstrom vorwiegend Grobanteil der Rohmaterial-Trockenmischung enthält, bei welchem Grobanteil-Teilstrom mindestens 60 Gew.% der Partikel grösser als eine Partikelgrössen-Grenze sind; und wobei ein Feinanteil-Teilstrom vorwiegend Feinanteil der Rohmaterial-Trockenmischung enthält; bei welchem Feinanteil-Teilstrom höchstens 40 Gew.% der Partikel grösser als die Partikelgrössen-Grenze sind, und wobei die Partikelgrössen-Grenze im Bereich von 200 µm bis 500 µm liegt,
d) dosiertes Zuführen von Wasser in den Grobanteil-Teilstrom und Benetzen der Partikel des Grobanteil-Teilstroms;
e) Zusammenführen des die benetzten Partikel aufweisenden Grobanteil-Teilstroms mit dem trockenen Feinanteil-Teilstrom und Mischen der beiden Teilströme zu einem feuchten Rohmaterial-Gesamtstrom bis ein Rohteig entsteht.

2. Verfahren nach Anspruch 1, **dadurch gekennzeichnet, dass** in Schritt d) weniger Wasser zudosiert wird als der angestrebten Endfeuchte des Rohteigs entspricht, und dass nach dem Zusammenführen in Schritt e) ein weiterer Schritt erfolgt zum
f) dosierten Zuführen und Einmischen von weiterem Wasser in den zusammengeführten und gemischten feuchten Rohmaterial-Gesamtstrom, bis die angestrebte Endfeuchte des Rohteiges erreicht ist.

3. Verfahren nach Anspruch 1 oder 2, **dadurch gekennzeichnet, dass** die Rohmaterial-Trockenmischung ein Granulationsspektrum im Bereich von 0 µm bis 800 µm aufweist.

4. Verfahren nach einem der Ansprüche 1 bis 3, **dadurch gekennzeichnet, dass** in Schritt c) der Rohmaterial-Strom in einen Grobanteil-Teilstrom und in einen Feinanteil-Teilstrom aufgespalten wird, wobei:
➢ bei dem Grobanteil-Teilstrom mindestens 70 Gew.% der Partikel grösser als eine Partikelgrössen-Grenze sind;
➢ bei dem Feinanteil-Teilstrom höchstens 30 Gew.% der Partikel grösser als die Partikelgrössen-Grenze sind; und
➢ die Partikelgrössen-Grenze im Bereich von 200 µm bis 500 µm liegt.

5. Verfahren nach einem der Ansprüche 1 bis 4, **dadurch gekennzeichnet, dass** die Partikelgrössen-Grenze im Bereich von 300 µm bis 400 µm liegt.

6. Verfahren nach einem der Ansprüche 1 bis 5, **dadurch gekennzeichnet, dass** der Mittelwert der Korngrössen-Verteilung des Grobanteil-Teilstroms im Bereich von 350 µm bis 600 µm liegt und der Mittelwert der Korngrössen-Verteilung des Feinanteil-Teilstroms im Bereich von 100 µm bis 300 µm liegt.

7. Verfahren nach einem der Ansprüche 1 bis 6, **dadurch gekennzeichnet, dass** der Grobanteil-Teilstrom 10 bis 50 Gew.% des Rohmaterial-Stroms beträgt und der Feinanteil-Teilstrom 90 bis 50 Gew.% des Rohmaterial-Stroms beträgt.

8. Verfahren nach einem der Ansprüche 1 bis 7, **dadurch gekennzeichnet, dass** der Grobanteil-Teilstrom 20 bis 45 Gew.% des Rohmaterial-Stroms beträgt und der Feinanteil-Teilstrom 80 bis 55 Gew.% des Rohmaterial-Stroms beträgt.

9. Verfahren nach einem der Ansprüche 1 bis 8, **dadurch gekennzeichnet, dass** in Schritt d) der Grobanteil-Teilstrom durch eine Mischzone mit einem Mischvolumen transportiert wird und beim Zuführen von Wasser in den Grobanteil-Teilstrom sowohl das Wasser als auch die Partikel des Grobanteil-Teilstroms in dispergierter Form miteinander in Kontakt gebracht werden.

10. Verfahren nach Anspruch 9, **dadurch gekennzeichnet, dass** der Wasseranteil in Schritt d) zwischen 10 % und 100 % des für die angestrebte Rohteig-Endfeuchte benötigten Wassers beträgt.

11. Verfahren nach Anspruch 9, **dadurch gekennzeichnet, dass** der Wasseranteil in Schritt d) mehr als 100 % des für die angestrebte Rohteig-Endfeuchte benötigten Wassers beträgt.

12. Verfahren nach einem der Ansprüche 2 bis 11, **dadurch gekennzeichnet, dass** in Schritt d) zwischen 15 Gew.% und 80 Gew.% des für die angestrebte Rohteig-Endfeuchte benötigten Wassers in den Grobanteil-Teilstrom zudosiert wird und in Schritt f) zwischen 85 Gew.% und 20 Gew.% des für die angestrebte Rohteig-Endfeuchte benötigten Wassers in den feuchten Rohmaterial-Gesamtstrom zudosiert wird, wobei die Angaben in Gew.% auf die Gesamtmasse des in Schritt e) er haltenen feuchten Rohteiges bezogen werden.

13. Verfahren nach einem der Ansprüche 2 bis 11, **dadurch gekennzeichnet, dass** in Schritt d) zwischen 25 Gew.% und 70 Gew.% des für die angestrebte Rohteig-Endfeuchte benötigten Wassers in den Grobanteil-Teilstrom zudosiert wird und in Schritt f) zwischen 75 Gew.% und 30 Gew.% des für die angestrebte Rohteig-Endfeuchte benötigten Wassers in den feuchten Rohmaterial-Gesamtstrom zudosiert wird, wobei die Angaben in Gew.% auf die Gesamtmasse des in Schritt e) erhaltenen feuchten Rohteiges bezogen werden.

14. Verfahren nach einem der vorhergehenden Ansprüche, **dadurch gekennzeichnet, dass** die angestrebte Endfeuchte des fertigen Rohteiges 25 Gew.% bis 35 Gew.% bezogen auf die feuchte Rohteig-Masse beträgt.

## Claims

1. Method for producing raw dough by using starch-containing raw materials, in particular cereal-based flour, middlings and semolina, the method comprising the following steps:
a) providing a raw material dry mixture containing starch-containing raw materials and coarser and finer particles;
b) continuously conveying the raw material dry mixture as a raw material flow;
c) separating the raw material flow into at least two partial flows, a coarse material partial flow containing predominantly coarse material from the raw material dry mixture, in which coarse material partial flow at least 60 % by weight of the particles are greater than a particle size threshold; and a fine material partial flow containing predominantly fine material from the raw material dry mixture, in which fine material partial flow a maximum of 40 % by weight of the particles are greater than the particle size threshold, the particle threshold lying in the range between 200 µm and 500 µm,
d) adding water in a metered fashion to the coarse material partial flow and wetting the particles of the coarse material partial flow;
e) merging the coarse material partial flow comprising the wetted particles with the dry fine material partial flow and mixing the two partial flows to form a moist raw material complete flow until a raw dough is produced.

2. Method according to claim 1, **characterised in that** in step d) less water is added in a metered fashion than the amount corresponding to the desired final moisture content in the raw dough, and **in that**, after the merging process in step e), a further step is carried out
f) adding more water in a metered fashion and mixing said water with the merged and mixed moist raw material complete flow until the desired final moisture content of the raw dough has been attained.

3. Method according to either claim 1 or claim 2, **characterised in that** the raw material dry mixture has a granulation spectrum in the range between 0 µm and 800 µm.

4. Method according to any one of claims 1 to 3, **characterised in that** the raw material flow is separated into a coarse material partial flow and a fine material partial flow in step c),:
- at least 70 % by weight of the particles in the coarse material partial flow being greater than a particle size threshold;
- a maximum of 30 % by weight of the particles in the fine material partial flow being greater than the particle size threshold; and
- the particle size threshold lying in the range between 200 µm and 500 µm.

5. Method according to any one of claims 1 to 4, **characterised in that** the particle size threshold lies in the range between 300 µm and 400 µm.

6. Method according to any one of claims 1 to 5, **characterised in that** the mean value of the grain size distribution of the coarse particle partial flow is in the range between 350 µm and 600 µm and the mean value of the grain size distribution of the fine material partial flow is in the range between 100 µm and 300 µm.

7. Method according to any one of claims 1 to 6, **characterised in that** the coarse material partial flow represents 10 to 50 % by weight of the raw material flow and the fine material partial flow represents 90 to 50 % by weight of the raw material flow.

8. Method according to any one of claims 1 to 7, **characterised in that** the coarse material partial flow represents 20 to 45 % by weight of the raw material flow and the fine material partial flow represents 80 to 55% by weight of the raw material flow.

9. Method according to any one of claims 1 to 8, **characterised in that** in step d) the coarse material partial flow is conveyed through a mixing zone comprising a mixing volume and, when adding water to the coarse material partial flow, the water and the particles of the coarse material flow are brought into contact with one another in a dispersed form.

10. Method according to claim 9, **characterised in that** the proportion of water used in step d) is between 10 % and 100 % of the water required for the desired final moisture content in the raw dough.

11. Method according to claim 9, **characterised in that** the proportion of water used in step d) is greater than 100 % of the water required for the desired final moisture content in the raw dough.

12. Method according to any one of claims 2 to 11, **characterised in that** between 15 % by weight and 80 % by weight of the water required for the desired final moisture content in the raw dough is added in a metered fashion to the coarse material partial flow in step d) and between 85 % by weight and 20 % by weight of the water required for the desired final moisture content in the raw dough is added in a metered fashion to the moist raw material complete flow in step f), the amounts specified in % by weight being based on the total mass of the moist raw dough obtained in step e).

13. Method according to any one of claims 2 to 11, **characterised in that** between 25 % by weight and 70 % by weight of the water required for the desired final moisture content in the raw material is added in a metered fashion to the coarse material partial flow in step d) and between 75 % by weight and 30 % by weight of the water required for the desired final moisture content in the raw dough is added in a metered fashion to the moist raw material complete flow in step f), the amounts specified in % by weight being based on the total mass of the moist raw dough obtained in step e).

14. Method according to any one of the preceding claims, **characterised in that** the desired final moisture content of the finished raw dough is between 25 % by weight and 35 %, based on the mass of the moist raw dough.

## Revendications

1. Procédé de fabrication de pâte crue utilisant des matières premières amylacées, notamment de la farine, des graines et de la semoule à base de céréales, le procédé ayant les étapes suivantes:
a) préparation d'un mélange sec de matières premières présentant des matières premières amylacées, contenant des particules plus grossières et plus fines;
b) transport continu du mélange sec de matières premières sous forme de flux de matières premières;
c) division du flux de matières premières en au moins deux flux partiels, où un flux partiel de particules grossières contient principalement une partie grossière du mélange sec de matières premières, où dans ledit flux partiel de particules grossières au moins 60 % en poids des particules sont de taille supérieure à un seuil granulométrique; et où un flux partiel de particules fines contient principalement une partie fine du mélange sec de matières premières, où dans ledit flux partiel de particules fines au maximum 40 % en poids des particules sont de taille supérieure au seuil granulométrique, et où le seuil granulométrique se situe dans une plage entre 200 µm et 500 µm,
d) additionnement dosé d'eau dans le flux partiel de particules grossières et humectation des particules du flux partiel de particules grossières;
e) combinaison du flux partiel grossier présentant les particules humectées au flux partiel présentant les particules fines sèches et mélange des deux flux partiels en un flux commun de matières premières humectées jusqu'à obtention d'une pâte crue.

2. Procédé selon la revendication 1, **caractérisé en ce qu'**en l'étape d) l'eau est additionnée selon un dosage inférieur à ce qui correspond au taux d'hydratation visé pour la pâte crue et **en ce qu'**après le mélange en étape e) une étape supplémentaire est exécutée pour assurer une
f) addition dosée et intégration d'une quantité supplémentaire d'eau dans le flux commun de matières premières humectées combinées et mélangées, jusqu'à obtention du taux d'hydratation final voulu pour la pâte crue.

3. Procédé selon les revendications 1 ou 2, **caractérisé en ce que** le mélange sec de matières premières présente une gamme granulométrique allant de 0 µm à 800 µm.

4. Procédé selon l'une des revendications 1 à 3, **caractérisé en ce qu'**en étape c) le flux de matières premières est divisé en un flux partiel de particules grossières et en un flux partiel de particules fines, où:
► dans le flux partiel de particules grossières au minimum 70 % en poids des particules dépassent un seuil granulométrique;
► dans le flux partiel de particules fines au maximum 30 % en poids des particules dépassent le seuil granulométrique; et
► le seuil granulométrique se situe dans la plage entre 200 µm et 500 µm.

5. Procédé selon l'une des revendications 1 à 4, **caractérisé en ce que** le seuil granulométrique se situe dans la plage entre 300 µm et 400 µm.

6. Procédé selon l'une des revendications 1 à 5, **caractérisé en ce que** la valeur moyenne de la distribution granulométrique du flux partiel de particules grossières se situe dans la plage entre 350 µm et 600 µm et la valeur moyenne de la distribution granulométrique du flux partiel de particules fines se situe dans la plage entre 100 µm et 300 µm.

7. Procédé selon l'une des revendications 1 à 6, **caractérisé en ce que** le flux partiel de particules grossières représente de 10 à 50 % en poids du flux de matières premières et le flux partiel de particules fines représente de 90 à 50 % en poids du flux de matières premières.

8. Procédé selon l'une des revendications 1 à 7, **caractérisé en ce que** le flux partiel de particules grossières représente de 20 à 45 % en poids du flux de matières premières et le flux partiel de particules fines représente de 80 à 55 % en poids du flux de matières premières.

9. Procédé selon l'une des revendications 1 à 8, **caractérisé en ce qu'**en l'étape d) le flux partiel de particules grossières est transporté à travers une zone de mélangeage avec un volume de mélange et que lors de l'addition de l'eau dans le flux partiel de particules grossières l'eau ainsi que les particules du flux partiel de particules grossières entrent en contact en phase de dispersion.

10. Procédé selon la revendication 9, **caractérisé en ce que** la part d'eau en l'étape d) représente entre 10 % et 100 % de la quantité d'eau nécessaire pour obtenir le taux d'hydratation final voulu pour la pâte crue.

11. Procédé selon la revendication 9, **caractérisé en ce que** la part d'eau en l'étape d) représente plus de 100 % de la quantité d'eau nécessaire pour obtenir le taux d'hydratation final voulu pour la pâte crue.

12. Procédé selon l'une des revendications 2 à 11, **caractérisé en ce qu'**en l'étape d) on ajoute de 15 % à 80 % en poids de l'eau nécessaire pour obtenir le taux d'hydratation final voulu pour la pâte crue par additionnement dosé au flux partiel de particules grossières et en l'étape f) on ajoute de 85 % à 20 % en poids de l'eau nécessaire pour obtenir le taux d'hydratation final par additionnement dosé au flux total de matières premières humectées, où les indications en % pondéral sont citées par rapport à la masse totale de la pâte crue humectée obtenue à l'étape e).

13. Procédé selon l'une des revendications 2 à 11, **caractérisé en ce qu'**en l'étape d) on ajoute de 25 % à 70 % en poids de l'eau nécessaire pour obtenir le taux d'hydratation final voulu pour la pâte crue par additionnement dosé au flux partiel de particules grossières et en l'étape f) on ajoute de 75 % à 30 % en poids de l'eau nécessaire pour obtenir le taux d'hydratation final par additionnement dosé au flux total de matières premières humectées, où les indications en % pondéral sont citées par rapport à la masse totale de la pâte crue humectée obtenue à l'étape e).

14. Procédé selon l'une des revendications précédentes, **caractérisé en ce que** le taux d'hydratation final voulu pour la pâte crue terminée représente de 25 % à 35 % en poids de la masse de pâte crue humectée.
